Europäisches Patentamt

European Patent Office

Office européen des brevets

(19)

(11) **EP 1 560 418 A2**

(12) **EUROPEAN PATENT APPLICATION**

(43) Date of publication:
03.08.2005 Bulletin 2005/31

(51) Int Cl.$^7$: **H04N 1/60**

(21) Application number: 05001676.5

(22) Date of filing: 27.01.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **29.01.2004 JP 2004021492**

(71) Applicant: **Fuji Photo Film Co. Ltd.
Kanagawa 250-0193 (JP)**

(72) Inventor: **Shimazaki, Osamu
Fuji Photo Film Co., Ltd.
Ashigarakami-gun Kanagawa 258-8538 (JP)**

(74) Representative: **Klunker . Schmitt-Nilson . Hirsch
Winzererstrasse 106
80797 München (DE)**

(54) **Color conversion apparatus, color conversion program storage medium and color conversion method**

(57) The present invention allows a K component to be arbitrarily set in converting original image data representing color in a CMYK color space into image data representing the same color in another CMYK color space.

A first LUT data generation section to sequentially generate first LUT data D1 representing color in a first CMYK color space, a data conversion section to convert the first LUT data D1 into data D3 composed of three color (CMY) component values, a gray component extraction section to obtain the smallest of the component values of which the data D3 is composed as a gray component, a K component generating function generation section to generate a K component generating function using prescribed parameter values, a K component calculation section to calculate a desired K component using the gray component and the K component generating function, and a LUT generation section to generate a LUT which associates the first LUT data D1 and the second LUT data D2 representing color in the second CMYK color space are provided.

Fig. 6

**Description**

BACKGROUND OF THE INVENTION

Field of the Invention

This invention relates to a color conversion apparatus, a color conversion program storage medium and a color conversion method to convert first image data representing color in a first CMYK color space into second image data representing color in a second CMYK color space.

Description of the Related Art

It is often carried out that an image is printed out from original image data generated for printing, using an output device, for example, a color printer which is not categorized as a printing press.

Many kinds of output devices such as printing presses and color printers represent colors in a color image using a CMYK color space composed of four color components cyan (C), magenta (M), yellow (Y) and black (K). However, when a color image is printed out by different output devices, the printed colors vary between the output devices used even if the CMYK color component values of the color image remain unchanged. In this sense, the CMYK color space differs between different kinds of output devices such as printing presses and color printers. Even between the same kind of output devices, the CMYK color space differs between them unless they are used under the same conditions, for example, as to printing paper and ink.

As described above, when original image data generated for printing by a certain output device is outputted by another output device, the outputted image obtained may differ in color from an image outputted by the certain output device. This is because, even if the same original image data is used on the two output devices, the CMYK color spaces of the two output devices often differ. Conventionally, a color conversion apparatus has been in use to avoid the above problem. The color conversion apparatus converts the original image data without changing the color represented by the original image data into image data representing the color in a CMYK color space corresponding to the output device about to be used to print out the image data.

The above color conversion apparatus performs color conversion processing to convert the first image data used as original image data representing color in the first CMYK color space into the second image data representing color in the second CMYK color space while maintaining a color match between the color represented by the first image data and the color represented by the second image data. In many cases, for this kind of conversion processing, a three-dimensional color space, for example, an L*a*b* color space which is independent of output devices is used to objectively represent color as viewed by human-beings. Such an output device-independent color space will be hereinafter referred to as a colorimetric color space. There is an idea of maintaining a color match between the first and the second image data by, in the process of calculating the values of the four CMYK components constituting the second image data, representing the color represented by the first image data in a colorimetric space and then obtaining the second image data that represents the color represented in the colorimetric space. Based on this idea, however, only three defining conditions are available to calculate the values of the four CMYK components in the second image data so that it is not possible to uniquely determine the values of the four components.

There is a method proposed by the ICC (International Color Consortium). According to the method, manufacturers of output devices such as printing presses and printers are to prepare, for each output device they manufacture, a profile which uniquely defines each component of the CMYK color space for each color represented in a colorimetric space and then the profile is to be used in color conversion processing performed by a color conversion apparatus. However, to use ICM, which is said to be an ICC's standard color signal processing module, or ColorSync, it is necessary to generate beforehand an output profile which provides L*a*b*-to-CMYK conversion data including black printing data. In this case, arranging black printing as desired on the spot is not possible and operation to be performed is complicated. Furthermore, image data conversion from CMYK to L*a*b*, and then to CMYK with priority on chromaticity accuracy does not take into account delicate differences in shape between color reproduction areas and often causes problems such as color blurring and tone jumps.

A number of methods have been proposed for calculating, from three component values representing color in a colorimetric color space, the four component values representing the color in a CMYK color space. In such methods, the value of the K component alone is determined first, then the values of the remaining three components CMY are calculated using the value of the K component and the three component values representing the color in a colorimetric color space.

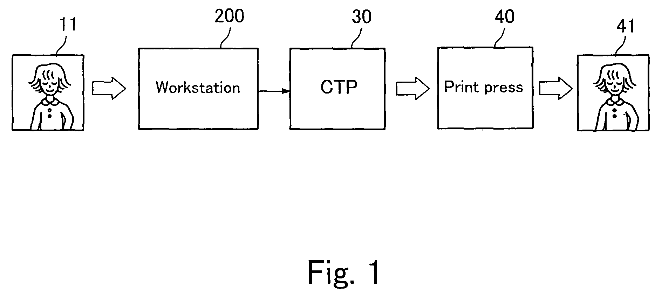

In one of such methods, the value of the K component of the first image data is used also as the K component of the second image data after conversion on the assumption that the effect of the K component on color representation is relatively small as compared with the other three components C, M and Y. In another of such methods, with consideration given to a coverage restriction imposing a prescribed limit on the total amount of ink to be consumed by an output device about to start printing, the K component of the second image data after conversion is determined such that the color reproduction area in a CMYK color space is maximum (see Japanese Patent Laid-Open No. 6-178095 (paragraph nos. 0010 to 0054, FIG. 1) , as an example). In still another of such methods, the K component of the second image data after conversion is determined in such a way as to convert as much of the three color components C, M and Y as possible of the original image data into the K component of the second image data after conversion (see Japanese Patent Laid-Open No. 2002-10096 (paragraph nos. 0024 to 0091, FIG. 1), as an example).

In the above three methods, when original image data representing color in a CMYK color space is converted into image data representing color in another CMYK color space, the value of the K component after conversion is determined in a restricted way, for example, in a color conversion apparatus for performing color conversion in such a conversion method. In such a way, it is not possible, for example, for the operator to arbitrarily determine the value of the K component. Simply allowing some flexibility to the process of determining the value of the K component results in impairing the color match between the first and the second image data.

An appropriate value of the K component to be used in printing a color image differs depending on the printing paper to be used, for example, depending on whether the color image is to be printed on newsprint paper or on art paper. Hence, there is a strong need for arbitrariness in determining the value of the K component.

SUMMARY OF THE INVENTION

The present invention has been made in view of the above circumstances with an object to provide a color conversion apparatus, a color conversion program storage medium and a color conversion method which allow the value of the K component to be arbitrarily determined in converting original image data representing color in a CMYK color space into image data representing the same color in another CMYK color space.

To achieve the above object, the present invention provides a color conversion apparatus which converts first image data representing color in a first CMYK color space into second image data representing color in a second CMYK color space, characterized in that the color conversion apparatus comprises:

a K component determination section which extracts a gray component of the color represented in the first CMYK color space and determines a K component in the second CMYK color space based on the gray component and a function determined by operation; and
a color conversion section which converts the first image data into the second image data using the K component determined in the K component determination section while maintaining a color match between the color represented by the first image data and the color represented by the second image data.

The color match mentioned above does not refer to a mechanical match such as that the color represented by the first image data and the color represented by the second image data completely coincide in color component values when represented in a colorimetric color space. The color match mentioned above refers to a substantial coincidence between the colors represented by the first and the second image data.

According to the color conversion apparatus of the present invention as described above, the K component of the second color space is determined based on the gray component extracted in the K component determination section and a function determined, for example, according to manual operation. The second image data, that is, image data after conversion is obtained using the K component determined as described above.

The above-mentioned color represented in the first CMYK color space may be plural prescribed colors different from the color represented by the first image data that is the object of conversion or it may be the very color represented by the first image data in the first CMYK color space.

In the first of the above two cases, the first image data that is the object of conversion is converted into the second image data, for example, as follows. First, the gray components of the plural predetermined colors are extracted and the corresponding K component values in the second CMYK color space are determined. Using on the K component values, the colors, corresponding to the plural predetermined colors on a one-to-one basis, represented in the second CMYK color space are determined and a LUT (Look Up Table) which associates the two groups of colors is generated. Then, the first image data is converted into the second image data by making reference to the LUT.

In the second of the above two cases, that is, when the color represented in the first CMYK color space is the color represented by the first image data, the first image data that is the object of conversion is converted into the second image data, for example, as follows. First, the gray component is extracted from the color represented by the first image data and the corresponding K component value in the second CMYK color space is determined. Then, using the K component value, the values of the remaining CMY components in the second CMYK color space are determined, thereby converting the first image data into the second image data.

In either of the above two cases, the color conversion apparatus according to the present invention allows the operator to arbitrarily determine the K component value of image data after conversion by way of prescribed operation to set the function.

The K component determination section of the color conversion apparatus according to the present invention may represent in a prescribed CMY color space a color represented in the first CMYK color space and extract the smallest of the CMY components in the CMY color space as a gray component.

Alternatively, the K component determination section of the color conversion apparatus according to the present invention may extract the brightness of a color represented in the first CMYK color space as a gray component.

Generally, when a color is represented in a CMY color space, the gray component is evenly color separated into the CMY components. Namely, the gray component value of any color represented in a CMY color space is determined by the smallest of the CMY components of the color. Therefore, once representing in a CMY color space a color represented in the first CMYK color space enables the gray component to be extracted easily.

Also, generally, a brighter color has a smaller gray component and a darker color has a larger gray component. Namely, the gray component value of a color is determined by the brightness of the color. Therefore, regarding the gray component of a color as representing the brightness of the color makes it easy to extract the gray component of the color.

It is a preferred form of the color conversion apparatus according to the present invention that the color conversion apparatus is provided with a function calculation section which determines the function by having prescribed parameters manually inputted and transforming a prescribed fundamental function based on the inputted parameter values.

The color conversion apparatus in the preferred form being provided with the function calculation section allows the operator to set the function by inputting parameter values with ease.

It is a preferred form of the color conversion apparatus according to the present invention that the color conversion apparatus is provided with a binary image generation section which generates binary images for the four colors C, M, Y and K equivalent to four color separated images obtained by separating an image into four colors C, M, Y and K used on the second image data.

According to the color conversion apparatus in the preferred form being provided with the binary image generation section, when printing an original image, a binary image with an appropriate amount of K component can be obtained for each of the four colors C, M, Y and K. Then, based on the binary image, an appropriate press plate for each of the four colors C, M, Y and K can be obtained for use in printing the original image. The press plates thus obtained enable the original image to be printed using CMYK inks each in an appropriate amount.

It is preferable that the binary image generation section generates:

a binary image for each of the four colors C, M, Y and K with the binary image being composed of halftone dots arrayed in 250 or more lines per inch with the area of each of the halftone dots being dependent on the corresponding one of the CMYK component values; or
a binary image for each of the four colors C, M, Y and K with the binary image being composed of an aggregation of image points the number of which being dependent on the corresponding one of the CMYK component values, or a binary image for each of the four colors C, M, Y and K with the binary image being composed of an aggregation of dots the number of which varies with changes in the corresponding one of the CMYK component values when the corresponding one of the CMYK component values does not exceed a prescribed lower limit value or the area of each of which varies with changes in the corresponding one of the CMYK component values when the corresponding one of the CMYK component values exceeds the prescribed lower limit value.

In printing an image by generating halftone dot images as binary images for the four colors C, M, Y and K and then obtaining press plates using the halftone dot images, if a large amount of K ink is used, a rosette pattern conspicuous enough to be visually recognizable appears on the printed image due to overlaying of regularly arrayed halftone dots in the four colors C, M, Y and K, thus detracting from the image quality. In this regard, it is known that such a rosette pattern if generated is fine enough not to be visually recognizable in case the halftone dot images making up each halftone dot image used for printing are arrayed in 250 or more lines per inch. When using binary images each composed of image points the number of which varies either with the corresponding one of the CMYK component values or with the corresponding one of the CMYK component values not exceeding a prescribed lower limit value, generation of a rosette pattern can be prevented, for example, by arraying the image points irregularly. Thus, the binary image generation section as described above makes it possible to obtain quality printed images.

To achieve the above object, the present invention provides a color conversion program storage medium storing a color conversion program which operating on a computer converts first image data representing color in a first CMYK color space into second image data representing color in a second CMYK color space, with the color conversion program stored in the color conversion program storage medium while operating on the computer comprising:

a K component determination section which extracts the gray component of the color represented in the first CMYK color space and determines the K component in the second CMYK color space based on the gray component and a function determined according to operation; and

a color conversion section which converts the first image data into the second image data using the K component determined in the K component determination section while maintaining a color match between the color represented by the first image data and the color represented by the second image data.

By executing the color conversion program as described above on a computer for example, the color conversion apparatus according to the present invention can be realized easily.

To achieve the above object, the present invention provides a color conversion method for converting first image data representing color in a first CMYK color space into second image data representing color in a second CMYK color space, the color conversion method being characterized in that it includes:

a K component determination step for extracting the gray component of the color represented in the first CMYK color space and determining the K component in the second CMYK color space based on the gray component and a function determined according to operation; and

a color conversion step for converting the first image data into the second image data using the K component determined in the K component determination section while maintaining a color match between the color represented by the first image data and the color represented by the second image data.

According to the color conversion method, like in the case of the color conversion apparatus according to the present invention or a computer internally executing the color conversion program according to the present invention, the K component value can be arbitrarily set by way of setting the function using prescribed operation when converting original image data representing color in a CMYK color space into image data representing the same color in another CMYK color space.

Only the basic forms of the color conversion program storage medium and the color conversion method according to the present invention have been described above just to avoid duplication. In addition to the basic forms, there are also various forms of the color conversion program storage medium and the color conversion method according to the present invention, corresponding to various forms of the color conversion apparatus.

In the color conversion program of the present invention, each of the constituent elements such as the K component determination section composed on a computer may be composed of either a single program part or plural program parts; or plural constituent elements may be composed of a single program part. The program parts may compose the above constituent elements themselves or may issue instructions to other programs or program parts to have the constituent elements composed by them.

As described above, the color conversion apparatus according to the present invention allows the K component value to be arbitrarily set in converting original image data representing color in a CMYK color space into image data representing the same color in another CMYK color space.

BRIEF DESCRIPTION OF THE DRAWINGS

FIG. 1 is a block diagram showing a configuration of an entire print image formation system according to an embodiment of the present invention;

FIG. 2 is a perspective view showing an external appearance of the workstation 200 shown in FIG. 1;

FIG. 3 is a block diagram showing a hardware configuration of the workstation 200;

FIG. 4 is a flowchart showing a first embodiment of a color conversion method according to the present invention;

FIG. 5 is a diagram showing a first embodiment of a color conversion program storage medium according to the present invention;

FIG. 6 is a functional block diagram of a first embodiment of a color conversion apparatus according to the present invention;

FIG. 7 shows parameter values obtained in the K component generating function generation section shown in FIG. 6;

FIG. 8 is a diagram showing a parameter value setting screen used to set the parameter values shown in FIG. 7;

FIG. 9 is a diagram showing an example of a halftone dot image composed of halftone dots arrayed in 250 or more lines per inch generated as a binary image in the binary image generation section shown in FIG. 8 with the area of each of the halftone dots being determined by the corresponding one of the CMYK component values;

FIG. 10 is a graph showing the relationship between the effect of image quality improvement and the ease of printing affected by the increased number of lines of array of AM halftone dots;

FIG. 11 shows an example of an FM halftone dot image;

FIG. 12 shows an example of an FM halftone dot image whose image dot pattern is different from that of the FM halftone dot image shown in FIG. 11;

FIG. 13 shows an example of a bright AM/FM hybrid halftone dot image;

FIG. 14 shows an example of an AM/FM hybrid halftone dot image with intermediate brightness;

FIG. 15 shows an example of a dark AM/FM hybrid halftone dot image;

FIG. 16 is a flowchart showing a second embodiment of the color conversion method according to the present invention;

FIG. 17 is a diagram showing a second embodiment of the color conversion program storage medium according to the present invention;

FIG. 18 is a functional block diagram of a second embodiment of the color conversion apparatus according to the present invention;

FIG. 19 shows parameter values obtained in the K component generating function generation section shown in FIG. 18; and

FIG. 20 is a diagram showing a parameter value setting screen used to set the parameter values shown in FIG. 19.

DETAILED DESCRIPTION OF THE INVENTION

The embodiments of the present invention will be described in the following with reference to the drawings.

FIG. 1 is a block diagram showing a configuration of an entire print image formation system according to an embodiment of the present invention.

In the print image formation system shown in FIG. 1, original image data 11 representing color in a CMYK color space is inputted to a workstation 200. At the workstation 200, an operator performs electronic assembly work based on the inputted image data, thereby generating image data representing an image to be printed. To carry out printing, the generated image data for printing is inputted to a CTP (Computer To Plate) 30. At the CTP 30, a plate is generated for each of the CMYK color components corresponding to the inputted image data. The generated plates are set in a print press 40. Ink is applied to each of the plates set in the print press 40 and the ink applied to each of the plates is transferred onto printing paper, causing a print image 41 to be formed on the printing paper.

A feature of the print image formation system shown in FIG. 1 as an embodiment of the present invention resides in the content of processing performed in the workstation 200. The description of the workstation 200 follows.

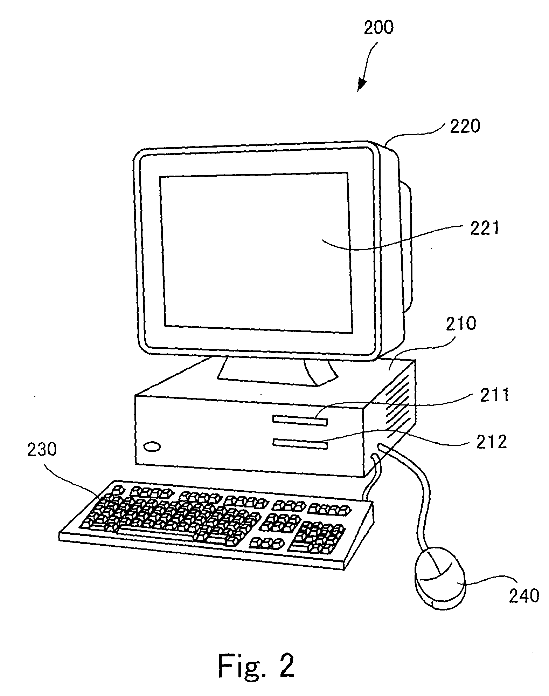

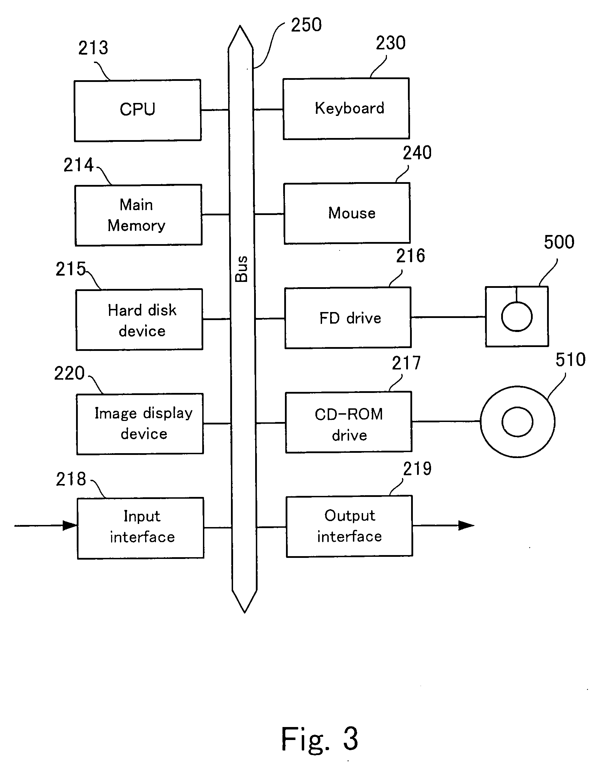

FIG. 2 is a perspective view showing an external appearance of the workstation 200 shown in FIG. 1. FIG. 3 is a block diagram showing a hardware configuration of the workstation 200.

The workstation 200 includes, as seen externally, a main unit 210, an image display device 220 which displays an image on a display screen 221 according to an instruction from the main unit 210, a keyboard 230 which, when a key operation is performed, inputs corresponding data to the main unit 210 and a mouse 240 which is used to point an arbitrary position on the display screen 221 to thereby input instructions corresponding to a display, for example, an icon shown at the position to the main unit. As also seen externally, the main unit 210 has a flexible disk insertion slot 211 for inserting a flexible disk (hereinafter referred to as an "FD") and a CD-ROM insertion slot 212 for inserting a CD-ROM.

Inside the main unit 210, there are, as shown in FIG. 3, a CPU 213 to execute various programs, a main memory 214 where a program read out from a hard disk device 215 is loaded for execution by the CPU 213, the hard disk device 215 where various programs and data are stored, an FD drive 216 to access an FD 500, a CD-ROM drive 217 to access a CD-ROM 510 loaded therein, an input interface 218 to input image data, for example, from a color scanner or a digital camera, neither is shown, and an output interface 219 to output image data generated for printing to the CTP 30 shown in FIG. 1. These internal elements and the image display device 220, the keyboard 230 and the mouse 240 also shown in FIG. 2 are interconnected via a bus 250.

The CD-ROM 510 represents an embodiment of a data conversion program storage medium according to the present invention, and stores a data conversion program which makes the workstation 200 operate as a color conversion apparatus. The CD-ROM 510 is loaded into the CD-ROM drive 217, then the data conversion program stored on the CD-ROM 510 is uploaded to the workstation 200 and then stored in the hard disk device 215. When the data conversion program is activated and executed, the workstation 200 operates as a color conversion apparatus representing an embodiment of a color conversion apparatus according to the present invention.

In the following, a first embodiment of each of the color conversion method according to the present invention, the color conversion program storage medium according to the present invention and the color conversion apparatus according to the present invention will be described.

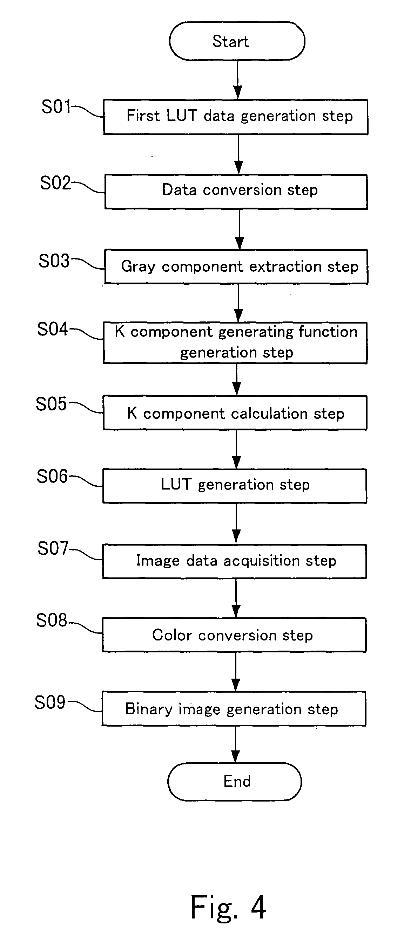

FIG. 4 is a flowchart showing the first embodiment of the color conversion method according to the present invention.

This color conversion method is composed of a first LUT data generation step (step S01), a data conversion step (step S02), a gray component extraction step (step S03), a K component generating function generation step (S04), a K component calculation step (step S05), a LUT generation step (step S06) , an image data acquisition step (step S07), a color conversion step (step S08) and a binary image generation step (step S09). The data conversion step (step S02), the gray component extraction step (step S03), the K component generating function generation step (S04) and the K component calculation step (step S05) combined constitute an example of a K component determination step of a color conversion method according to the present invention. The color conversion step (step S08) constitutes an example of a color conversion step of the color conversion method according to the present invention.

In the first LUT data generation step (step S01), plural image data which represents plural prescribed colors (hereinafter referred to as "reference colors") respectively in the first CMYK color space corresponding to the first image data that is the object of conversion are sequentially generated. Image data generated in this step is included in the data used to generate the LUT being described in the following. The data will be hereinafter referred to as the first LUT data.

In the data conversion step (step S02), the first LUT data sequentially generated in the first LUT data generation step (step S01) are sequentially converted into data which represents the reference colors corresponding to the first LUT data in a color space composed of three colors C, M and Y.

In the gray component extraction step (step S03), the smallest one of the CMY components of each of the data sequentially obtained in the data conversion step (step S02) is extracted sequentially as the gray component of each of the reference colors corresponding to each of the above-mentioned sequentially obtained data.

In the K component generating function generation step (step S04), a K component generating function is generated by having prescribed parameter values manually inputted by an operator and transforming a given fundamental function based on the prescribed parameter values. The K component generating function associates the gray components sequentially extracted in the gray component extraction step (step S03) with the K components in a desired second CMYK color space different from the first CMYK color space. The details of the K component generating function will be described later.

In the K component calculation step (step S05), using the gray components sequentially extracted in the gray component extraction step (step S03) and the K component generating function generated in the K component generating function generation step (step S04), the values of the K components corresponding to the gray components are sequentially calculated.

In the LUT generation step (step S06), using the K component values sequentially calculated in the K component calculation step (step S05), the second LUT data representing the reference colors corresponding to the K component values in the second CMYK color space are sequentially obtained and a LUT which associates the plural second LUT data thus obtained and the plural first LUT data on a one-to-one basis is generated.

In the image data acquisition step (step S07) , the first image data that is the object of conversion representing color in the first CMYK color space is obtained.

In the color conversion step (step S08), the first image data obtained in the image data acquisition step (step S07) is converted into the second image data that represents the color represented by the first image data in the second CMYK color space according to the LUT generated in the LUT generation step (step S06).

In the binary image generation step (step S09), based on the second image data generated in the color conversion step (step S08), a binary image is generated for each of the four colors C, M, Y and K. The binary images thus generated are equivalent to color-separated images obtained by color-separating an image into four colors C, M, Y and K.

Each of the above steps will be described in detail later.

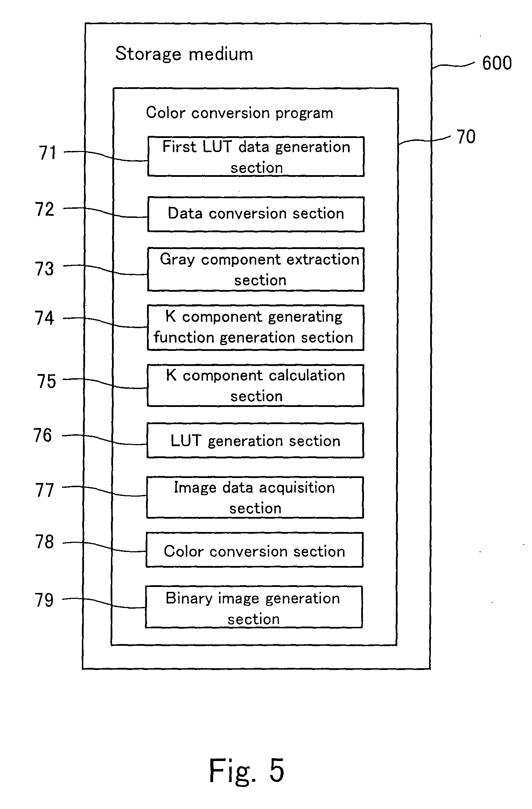

FIG. 5 is a diagram showing the first embodiment of the color conversion program storage medium according to the present invention. In this embodiment, a color conversion program 70 is stored in a storage medium 600.

The storage medium 600 shown in FIG. 5 may be any kind of storage device as long as it stores the color conversion program 70. It may be, for example, a CD-ROM storing the color conversion program 70, a hard disk device into which the color conversion program 70 has been loaded, or a flexible disk to which the color conversion program 70 has been downloaded.

The color conversion program 70 is executed in the workstation 200 shown in FIGS. 1 and 2 to make the workstation 200 operate as a color conversion apparatus according to the first embodiment of the present invention. The color conversion program 70 includes a first LUT data generation section 71, a data conversion section 72, a gray component extraction section 73, a K component generating function generation section 74, a K component calculation section 75, a LUT generation section 76, an image data acquisition section 77, a color conversion section 78 and a binary image generation section 79.

The first LUT data generation section 71, the data conversion section 72, the gray component extraction section 73, the K component generating function generation section 74, the K component calculation section 75, the LUT generation section 76, the image data acquisition section 77, the color conversion section 78 and the binary image generation section 79 assume a role to execute the first LUT data generation step (step S01), the data conversion step (step S02), the gray component extraction step (step S03), the K component generating function generation step (step S04), the K component calculation step (step S05), the LUT generation step (step S06), the image data acquisition step (step S07), the color conversion step (step S08) and the binary image generation step (step S09), respectively.

The data conversion section 72, the gray component extraction section 73, the K component generating function generation section 74 and the K component calculation section 75 combined constitute an example of the K component determination section of the color conversion program according to the present invention. The color conversion section 78 constitutes an example of the color conversion section of the color conversion program according to the present invention.

The details of each element of the color conversion program 70 will be described later.

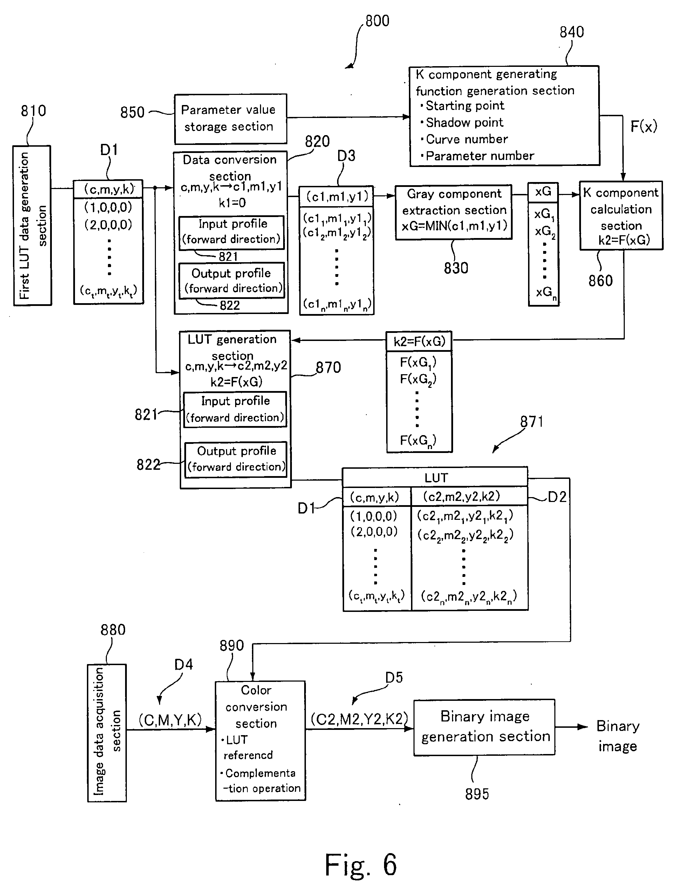

FIG. 6 is a functional block diagram of the first embodiment of the color conversion apparatus according to the present invention.

The color conversion apparatus 800 shown in FIG. 6 is composed when the color conversion program 70 shown in FIG. 5 is installed and executed in the workstation 200 shown in FIGS. 1 and 2. The color conversion apparatus 800 is, for example, a device which converts original image data, generated for printing by a printing press, representing color in the first CMYK color space corresponding to the printing press into image data representing the same color as represented by the original image data in a desired second CMYK color space being different from the first CMYK color space and corresponding to an output device, for example, a color printer. In the following, the original image data will be referred to as the first image data and the image data representing color in the second CMYK color space will be referred to as the second image data.

The color conversion apparatus 800 is composed of a first LUT data generation section 810, a data conversion section 820, a gray component extraction section 830, a K component generating function generation section 840, a parameter value storage section 850, a K component calculation section 860, a LUT generation section 870, an image data acquisition section 880, a color conversion section 890, and a binary image generation section 895. The first LUT data generation section 810, the data conversion section 820, the gray component extraction section 830, the K component generating function generation section 840, the K component calculation section 860, the LUT generation section 870, the image data acquisition section 880, the color conversion section 890, and the binary image generation section 895 make up the color conversion apparatus 80 shown in FIG. 6. These sections correspond to the first LUT data generation section 71, the data conversion section 72, the gray component extraction section 73, the K component generating function generation section 74, the K component calculation section 75, the LUT generation section 76, the image data acquisition section 77, the color conversion section 78 and the binary image generation section 79, respectively, which make up the color conversion program 70 shown in FIG. 5. The elements shown in FIG. 6 are composed of a combination of the hardware of the workstation 200 shown in FIG. 1 and the operating system and application programs executed on the personal computer included in the workstation 200. The elements of the color conversion program shown in FIG. 5 differ from the elements shown in FIG. 6 in that they are composed of the application programs only.

The data conversion section 820, the gray component extraction section 830, the K component generating function generation section 840 and the K component calculation section 860 combined correspond to an example of a K component determination section of the color conversion apparatus according to the present invention. The K component generating function generation section 840 constitutes an example of a function calculation section of the color conversion apparatus according to the present invention. Furthermore, the color conversion section 890 and the binary image generation section 895 constitute an example of a color conversion section and an example of a binary image generation section, respectively in the color conversion apparatus according to the present invention.

In the following, by way of describing each element of the color conversion apparatus 800 shown in FIG. 6, each step shown in the flowchart in FIG. 4 and each element of the color conversion program 70 shown in FIG. 5 will be described.

In the first LUT data generation section 810 included in the color conversion apparatus 800 shown in FIG. 6, plural first LUT data D1 representing plural reference colors in the first CMYK color space corresponding to the first image data that is the object of conversion are sequentially generated. Each of the plural first LUT data D1 is composed of component values c, m, y and k corresponding to four colors C, M, Y and K. FIG. 6 shows a typical flow of processing in which n sets of the first LUT data D1, that is, $(1, 0, 0, 0)$, $(2, 0, 0, 0)$, $\cdots$, $(c_t, m_t, y_t, k_t)$ representing $t^4$ ($= n$) kinds of reference colors are sequentially generated in the first LUT data generation section 810 and then sent to the data conversion section 820.

Each of the first LUT data D1 sequentially generated in the first LUT data generation step (step S01) and received by the data conversion section 820 is converted into data D3 which is composed of component values c1, m1 and y1 corresponding to three color components C, M and Y and which represents in a prescribed CMY color space the reference colors corresponding to the first LUT data D1. The CMY color space is a color space obtained by fixing the K component at 0 in the second CMYK color space corresponding to an output device about to be used to output the image. FIG. 6 shows n sets of data D3, that is, $(c1_1, m1_1, y1_1)$, $(c1_2, m1_2, y1_2)$, ..., $(c1_n, m1_n, y1_n)$, which correspond to the first LUT data D1 on a one-to-one basis. The conversion of the first LUT data D1 into data D3 is performed using an input profile 821 which associates the first CMYK color space with an L*a*b* color space in which colors are represented colorimetrically and an output profile 822 which associates the second CMYK color space with an L*a*b* color space. Namely, the three component values c1, m1 and y1 of the data D3 are obtained by adjusting the component values corresponding to three colors C, M and Y until the L*a*b* component values obtained from the first LUT data D1 using the input profile 821 and the L*a*b* component values obtained from the component values for three colors C, M and Y using the output profile 822 are approximately identical.

In the gray component extraction section 830, the smallest component value (MIN (c1, m1, y1)) among the component values c1, m1 and y1 corresponding to three colors C, M and Y of each of the data D3 which are sequentially obtained in the data conversion section 820 is obtained sequentially as the gray component xG of the reference color corresponding to the data D3. FIG. 6 shows n data, that is, $xG_1$, $xG_2$, ..., $xG_n$ obtained as gray components xG of n kinds of reference colors.

In the K component generating function generation section 840, a K component generating function is generated by having prescribed parameter values, to be further described later, manually inputted by an operator and transforming a prescribed fundamental function based on the prescribed parameter values. The K component generating function associates arbitrary gray components with K components in the second CMYK color space.

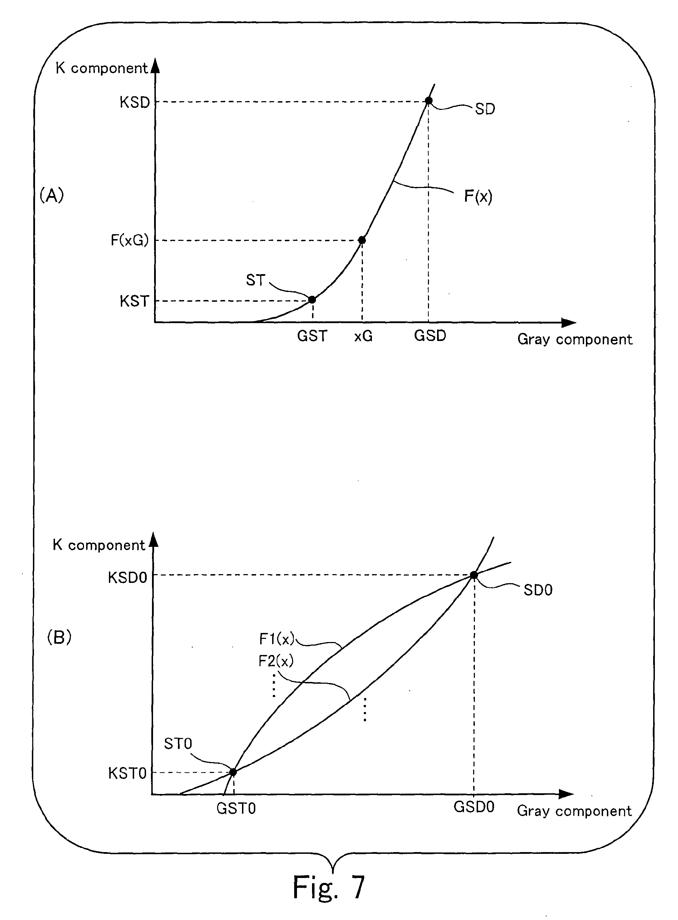

In the following, the parameter values obtained in the K component generating function generation section 840 and the parameter values to be set manually by the operator will be described with reference to FIGS. 6 and 7.

FIG. 7 shows parameter values obtained in the K component generating function generation section shown in FIG. 6.

Part (A) and Part (B) of FIG. 7 are graphs each showing correspondence between the gray component and the K component in the second CMYK color space. In each of the graphs, the horizontal axis represents the gray component and the vertical axis represents the K component. The curves shown in the graphs each represent the correspondence between the gray component and the K component.

In the present embodiment, setting the plural parameter values described in the following determines a curve representing the correspondence between the gray component and the K component. The correspondence between the gray component and the K component represented by a curve is referred to as a K component generating function. In part (A) of FIG. 7, a K component generating function F(x) determined as described in the following is shown.

The K component generating function F(x) is expressed by the following equation; wherein x represents a gray component, Fn(x) represents a prescribed fundamental function, and each of A, B, a, and b represents a constant:

$$F(x) = A \times Fn (a \times x + b) + B \qquad (1)$$

As known from the equation (1), to draw a curve like those shown in the graphs shown in FIG. 7, the basic shape of the curve is determined by the fundamental function Fn(x). Setting of the curve along the vertical axis of the graph is determined by the constant B; scaling along the vertical axis of the graph is determined by the constant A; setting along the horizontal axis of the graph is determined by the constant b; and scaling along the horizontal axis of the graph is determined by the constant a. Thus, in the present embodiment, parameter values corresponding to the four constants A, B, a and b used in the equation (1) and the fundamental function Fn(x) are set. The fundamental function Fn(x) to be set is selected from prescribed plural functions F1(x), F2(x), ... shown in Part (B) of FIG. 7, as described later. Each of the parameter values will be described in the following.

As shown in Part (A) of FIG. 7, the curve drawn by the K component generating function F(x) passes two points; a starting point ST corresponding to a bright image with a relatively small amount of gray component and a shadow point SD corresponding to a dark image with a relatively large amount of gray component. Of the coordinates (GST, KST) of the starting point ST, the ordinate KST is a parameter value corresponding to the constant B and the abscissa GST is a parameter value corresponding to the constant b. Of the coordinates (GSD, KSD) of the shadow point SD, the ordinate KSD is a parameter value to determine the constant A and the abscissa GSD is a parameter value to determine the constant a.

Whether the curve drawn by the K component generating function F(x) is basically convex or concave depends on the function, as described above, arbitrarily selected from among different functions F1(x), F2 (x), ... as shown in Part (B) of FIG. 7. To select a desired function, a prescribed curve number corresponding to the desired function is selected (for example, a curve number is selected from among curve numbers F1, F2, ... corresponding to the prepared functions F1(x), F2(x), ...).

In the present embodiment, a K component generating function F(x) which shows correspondence between the gray component and the K component is determined when the parameter values for the coordinates (GST, KST) of the starting point ST and for the coordinates (GSD, KSD) of the shadow point SD, and also a curve number are set by the operator.

Next, a process of calculating the values of four constants A, B, a and b included in the equation (1) using such parameter values as the coordinates (GST, KST) of the starting point ST and the coordinates (GSD, KSD) of the shadow point SD will be described.

The plural functions F1(x), F2(x), ··· are, as shown in Part (B) of FIG. 7, pass two fixed points ST0 (GST0, KST0) and SD0 (GSD0, KSD0). That is, the fundamental function Fn(x) selected from among the plural functions also passes the two fixed points. The K component generating function F (x) obtained by transforming the fundamental function Fn (x) passes the two points ST (GST, KST) and SD (GSD, KSD) set by the operator as described above. The two points ST and SD are desired locations on the graph where the fixed points ST0 and SD0 have been moved to according to the parameter values set by the operator. The relationships between the coordinates of the points ST and SD and the coordinates of the fixed points ST0 and SD0 are expressed by the following four equations.

$$F(GST) = A \times Fn(GST0) + B = A \times KST0 + B = KST \qquad (2)$$

$$F(GSD) = A \times Fn(GSD0) + B = A \times KSD0 + B = KSD \qquad (3)$$

$$a \times GST + b = GST0 \qquad (4)$$

$$a \times GSD + b = GSD0 \qquad (5)$$

From the equations (2) and (3), the two constants A and B are obtained as follows.

$$A = (KSD - KST)/(KSD0 - KST0) \qquad (6)$$

$$B = KST - KST0 \times (KSD - KST)/(KSD0 - KST0) \qquad (7)$$

From the equations (4) and (5), the two constants a and b are obtained as follows.

$$a = ((GSD0 - GST0)/GSD - GST)) \qquad (8)$$

$$b = GST0 - GST \times ((GSD0 - GST0)/(GSD - GST)) \qquad (9)$$

As described above, determining the four constants A, B, a and b uniquely determines a K component generating function F(x).

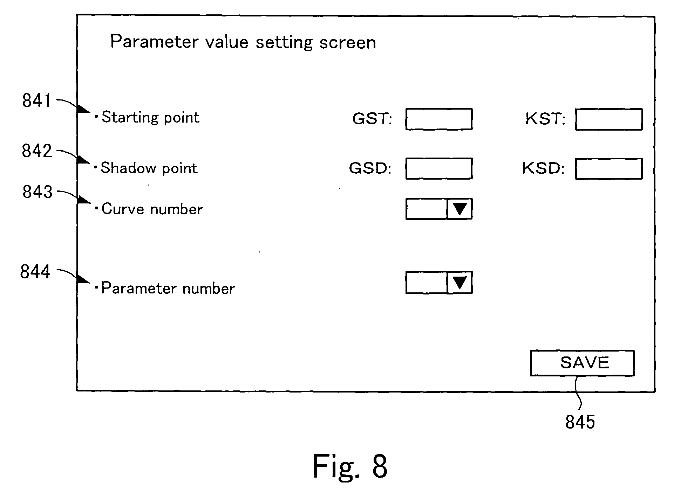

FIG. 8 is a diagram showing a parameter value setting screen used to set the parameter values shown in FIG. 7.

In the present embodiment, when the operator performs an operation such as selecting an appropriate icon (not shown) using the mouse 240 or the like shown in FIG. 2 for the purpose of setting the parameter values, the parameter value setting screen shown in FIG. 8 appears on the display screen 221 shown in FIG. 2 according to the operation. The parameter value setting screen has a starting point setting section 841 used to set the coordinates (GST, KST) of the starting point ST shown in FIG. 7, a shadow point setting section 842 used to set the coordinates (GSD, KSD) of the shadow point SD shown in FIG. 7, a curve number setting section 843 used to set a curve number and a storage instruction section 845 for instructing storage of a combination of parameter values and a curve number set using the above-mentioned setting sections. When such a combination of parameter values and a curve number is stored, a parameter number which indicates the storage of the combination is assigned to the combination. In the present embodiment, it is possible to set a desired one of the combinations of parameter values and a curve number already stored instead of newly setting required parameter values and a required curve number from the respective setting sections. A parameter number setting section 844 used to set a desired parameter number is provided on the parameter value setting screen.

The description of the parameter values required to determine the K component generating function F(x) and setting of the parameter values by the operator are terminated here. Next, the description of other elements of the color conversion apparatus 800 shown in FIG. 6 will follow.

The parameter value storage section 850 stores combinations of parameter values and a curve number set by the operator in the K component generating function generation section 840. As described above, in the K component generating function generation section 840, it is possible to set parameter values and a curve number by selecting one of the combinations already stored in the parameter value storage section 850.

In the K component calculation section 860, gray components $xG = MIN (c1, m1, y1) : xG_1, xG_2, \cdots, xG_n$ sequentially extracted in the gray component extraction section 830 are assigned to the K component generating function $F(x)$ generated in the K component generating function generation section 840 and thereby the K component values $k2: F(xG_1), F(xG_2), \cdots, F(xG_n)$ corresponding to the extracted gray components are calculated.

In the LUT generation section 870, first, the second LUT data D2 that represents, with four component values c2, m2, y2 and k2 of the second CMYK color space, the reference colors corresponding to the K component values $k2: F(xG_1), F(xG_2), \cdots, F(xG_n)$ sequentially calculated in the K component calculation section 860 are obtained. FIG. 6 shows n sets of the second LUT data D2: $(c2_1, m2_1, y2_1, k2_1), (c2_2, m2_2, y2_2, k2_2), \cdots, (c2_n, m2_n, y2_n, k2_n)$ corresponding to the n sets of the first LUT data D1: $(1, 0, 0, 0), (2, 0, 0, 0), \cdots, (c_t, m_t, y_t, k_t)$ on a one-to-one basis. To obtain the second LUT data D2, the K components k2, the input profile 821 and the output profile 822 are used. Namely, in the LUT generation section 870, three component values c2, m2 and y2 corresponding to three colors C, M and Y in each of the second LUT data D2 are obtained. To obtain the three component values c2, m2 and y2, until the L*a*b* component values in the L*a*b* color space that are obtained, using the output profile 822, from the data composed of the K component values k2 and three CMY component values become approximately identical with the L*a*b* component values that are obtained, using the input profile 821, from the component values of the first LUT data D1, the above-mentioned three CMY component values are adjusted. Subsequently, in the LUT generation section 870, a LUT 871 to associate the first LUT data D1 and the second LUT data D2 on a one-to-one basis is generated. The generated LUT 871 is stored in a storage section, not shown.

In the image data acquisition section 880, the first image data D4: (C, M, Y, K), that is the object of conversion, representing color in the first CMYK color space is obtained.

In the color conversion section 890, the first image data D4: (C, M, Y, K) obtained in the image data acquisition section 880 is converted into the second image data D5: (C2, M2, Y2, K2) that represents the same color as represented by the first image data D4 in the second CMYK color space by making reference to the LUT 871 generated in the LUT generation section 870. When this conversion is performed, the first LUT data D1 as well as the second LUT data D2 recorded discretely in the LUT 871 are appropriately complemented therebetween by complementation operation.

In the binary image generation section 895, a binary image is generated for each of the four colors C, M, Y and K based on the second image data D5 obtained in the color conversion section 890. The binary images thus generated are equivalent to color-separated images obtained by color-separating an image into four colors C, M, Y and K. The binary image generation section 895 has a threshold value matrix (not shown) for each of the four colors C, M, Y and K. The threshold value matrix is composed of an array of threshold values to be compared with component values C2, M2, Y2 and K2 corresponding to the four colors C, M, Y and K which are received from the color conversion section 890. When components values C2, M2, Y2 and K2 corresponding to the four colors C, M, Y and K for a certain pixel are received by the binary image generation section 895, each of the four component values is compared with the threshold value positioned correspondingly to the pixel in the threshold value matrix. For example, if the component value C2 corresponding to the color C is greater than the threshold value, the pixel is recognized as an 'on' point to be printed with cyan (C) ink. If the component value C2 is not greater than the threshold value, the pixel is recognized as an 'off' point not to be printed with cyan (C) ink. Depending on the result of the comparison between the component value C2 and the corresponding threshold value, the component value C2 is replaced with binary data representing an 'on' point or an 'off' point. The same process is performed for each of the component values C2, M2, Y2 and K2 received by the binary image generation section 895. In the image data acquisition section 880, the component values corresponding to the four colors C, M, Y and K are obtained sequentially for every one of the pixels making up an image to be the object of printing. In the color conversion section 890, the component values for the four colors C, M, Y and K thus obtained are sequentially converted into component values for the second CMYK color space and are then sent to the binary image generation section 895. In the binary image generation section 895, the process described above is performed for each of the received component values corresponding to the four colors C, M, Y and K. Consequently, in the binary image generation section 895, a binary image composed of an array of the binary data as described above is generated for each of the four colors C, M, Y and K.

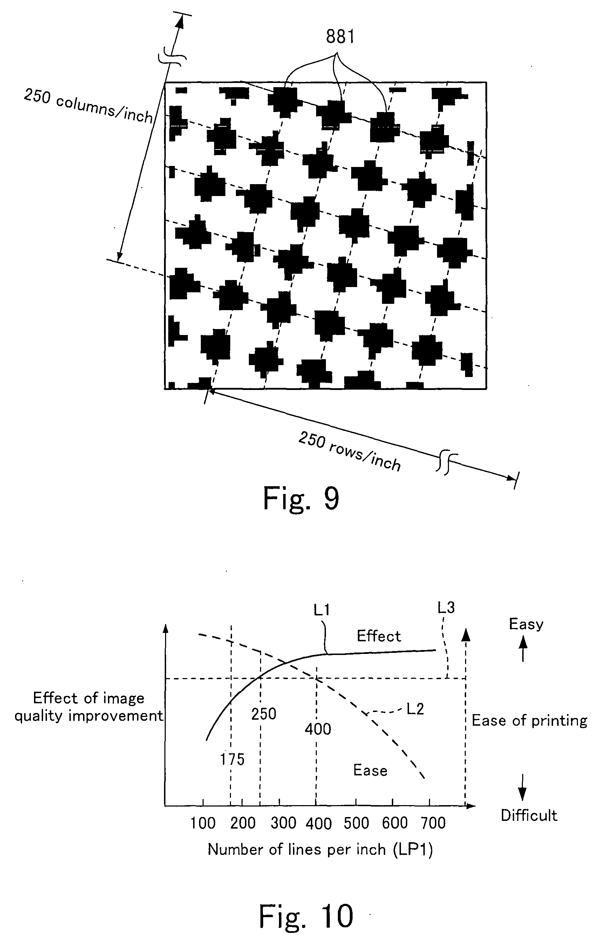

In the following, binary images generated in the binary image generation section 895 will be described with reference to FIGS. 9 to 14.

FIG. 9 is a diagram showing an example of a halftone dot image composed of halftone dots arrayed in 250 or more lines per inch generated as a binary image in the binary image generation section shown in FIG. 6. The area of each of the halftone dots is determined by the corresponding one of the CMYK component values. Such a halftone dot having an area dependent on the corresponding component value will be hereinafter referred to as an AM halftone dot.

FIG. 9 shows AM halftone dots 881. The binary image generation section 895 shown in FIG. 6 generates AM halftone dots like the AM halftone dots 881 and has a threshold value matrix defining AM halftone dots. Each of the AM halftone dots 881 is an aggregation of the 'on' points described above.

Generally, in a printed image composed of AM halftone dots, the AM halftone dots are arrayed regularly as described above so that interference occurs between the arrays of AM halftone dots corresponding to the four colors C, M, Y and K causing a so-called rosette pattern to appear. In most cases, such a rosette pattern is obscure enough not to be visually recognizable. It, however, may become clear enough to be visually recognizable when a relatively large amount of black (K) ink is used to print the image. The binary image generation section 895 shown in FIG. 6 generates halftone dots in an array with such a large number of lines per inch as 250 rows by 250 columns per square inch. The "number of lines per inch" represents the number of rows or columns per inch. In the present embodiment, because the LPI value is high, even if most of the gray components are replaced with K components causing a large amount of black (K) ink to be used to print an image, the resultant rosette pattern to appear on the printed image is fine enough not to be visually recognizable.

When the number of lines in the array of AM halftone dots is larger, the rosette pattern to appear on the printed image is finer resulting in higher image quality, but it is less easier to print the image.

FIG. 10 is a graph showing the relationship between the effect of image quality improvement and the ease of printing affected by the increase in the number of lines in the array of AM halftone dots.

In FIG. 10, the number of lines in the array of AM halftone dots are laid off along the horizontal axis, the effect of image quality improvement is represented along the lefthand vertical line, and the ease of printing is represented along the right-hand vertical axis. The graph also shows a curve L1 representing the change in the effect of image quality improvement with respect to the increase in the number of lines and another curve L2 representing the change in the ease of printing relative the change in the LPI value. As the curves L1, L2 indicate, when the LPI value increases, the effect of image quality improvement increases and the ease of printing decreases.

FIG. 10 also shows a border line L3 which indicates both a lower limit of the allowable ease of printing and a lower limit of the allowable image quality improvement effect. An array of AM halftone dots with an LPI value of 175 per inch, for example, can be printed easily, but the effect of image quality improvement is not up to the border line L3 so that a conspicuous rosette pattern will appear on the printed image.

As seen from FIG. 10, to secure both the ease of printing and the effect of image quality improvement above the lower limit indicated by the border line L3, the LPI value of an array of AM halftone dots to be printed is required to be in the range of 250 to 400. To meet this requirement, in the present embodiment, the LPI value is set to 250 for each array of halftone dots to be generated in the binary image generation section 895 shown in FIG. 6.

In the foregoing, a binary image generation section to generate AM halftone dots has so far been described as an example of a binary image generation section according to the present invention, but different kinds of binary images as described below may also be generated. Three examples of such different kinds of binary images are described in the following.

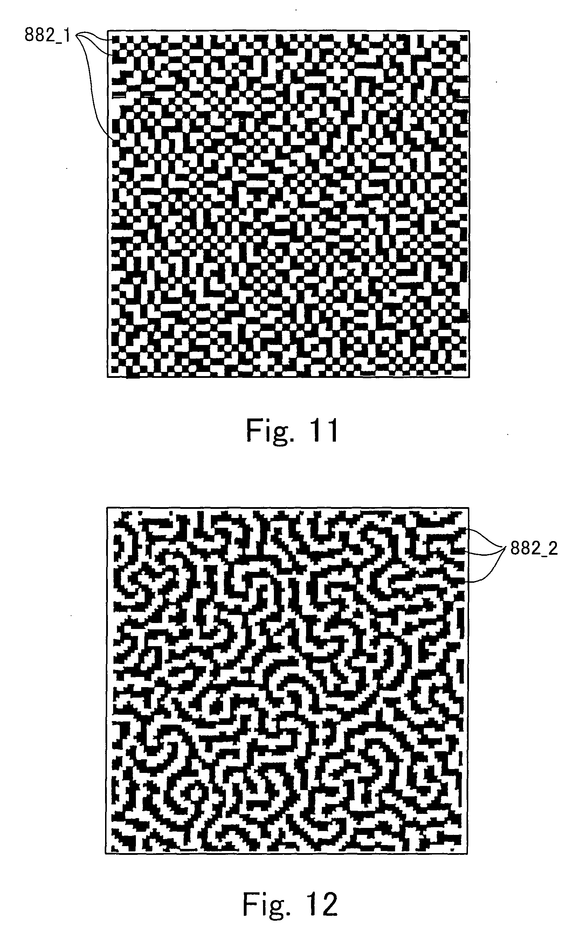

FIGS. 11 and 12 each show an example of a different kind of binary image composed of an aggregation of image points the number of which depends on the CMYK component values.

FIG. 11 shows an example of a binary image composed of irregularly arrayed image points 882_1 the number of which depends on image gradation. Such a binary image composed of an aggregation of image points the number of which depends on the image gradation is hereinafter referred to as an FM halftone dot image. Because the image points are arrayed irregularly in an FM halftone dot image, printing the image generates no rosette pattern and it is possible to obtain high print quality.

FIG. 12 shows an example of an FM halftone dot image whose image dot pattern is different from that of the FM halftone dot image shown in FIG. 11.

In the FM halftone dot image shown in FIG. 12, there is some regularity in the way image points 882_2 are arrayed. The image points 882_2 are arrayed so as to form irregular curves varying in length and shape according to image gradation. By using the FM halftone dot image shown in FIG. 12, and with the image points 882_2 arrayed such, a smooth, quality printed image can be obtained.

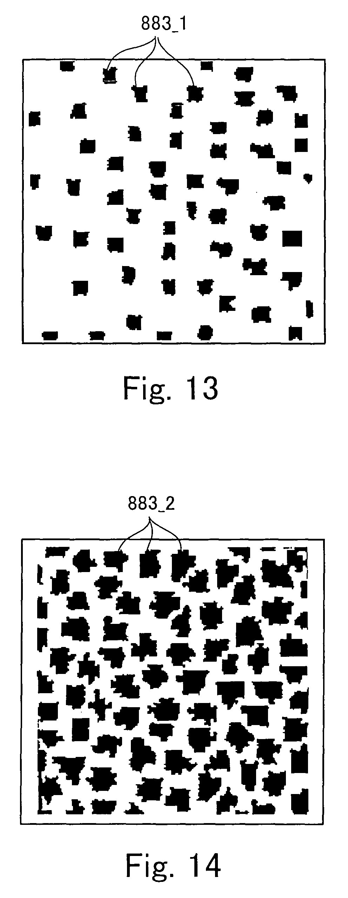

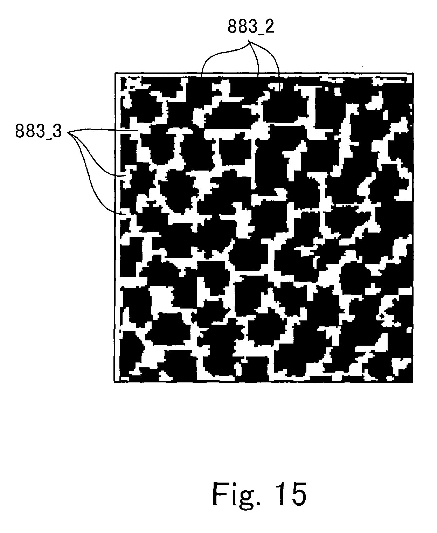

FIGS. 13 to 15 each show a binary image composed of an aggregation of dots the number of which varies with changes in component value when the corresponding one of the CMYK component values does not exceed a lower limit or the area of each of which varies with changes in component value when the corresponding one of the CMYK component values exceeds the lower limit. Shown in FIG. 13 is a bright binary image. Shown in FIG. 14 is a binary image with intermediate brightness. Shown in FIG. 15 is a dark binary image. A binary image the way whose image points are generated depends on the brightness of the image, that is, the image gradation, is hereinafter referred to as an AM/FM hybrid halftone dot image.

In an image in a highlighted state with the corresponding one of the CMYK component values not exceeding the lower limit, as shown in FIG. 13, image points 883_1 are irregularly arrayed while their number varies with changes in the corresponding one of the CMYK component values, that is, the image gradation like in the case of the FM halftone dot image shown in FIG. 11. An image with the corresponding one of the CMYK component values exceeding the lower limit, as shown in FIG. 14, is composed of points 883_2 each of which is composed of an aggregation of draw points and the area of each of which varies with changes in the corresponding one of the CMYK component values. Subsequently, as the image grows darker, the area of each of the points 883_2 grows larger. When the corresponding one of the CMYK component values becomes large enough to darken the image into a shadowed state, the points 883_2 are correspondingly enlarged and come to be combined at different locations as shown in FIG. 15, making the image look like having been painted out with only white spots 883_3 showing. Even such an image in a shadowed state, the area of each of the points 883_2 changes depending on the image gradation. The change in area of each of the points 883_2 may be regarded as representing the way in which the white spots 883_3 are, like the image points 882_1 composing the FM halftone dot image shown in FIG. 11, irregularly arrayed while their number varies with changes in the image gradation. In the AM/FM hybrid halftone dot images described above, the draw points 882_1, points 883_2 or white spots 883_3 are irregularly arrayed. Therefore, when they are printed, no rosette pattern is generated and quality printed images can be obtained as in the case of the FM halftone dot image shown in FIG. 11.

As described above, when the color conversion apparatus 800 according to the present embodiment is used to convert original image data representing color in a CMYK color space into image data representing the same color as represented by the original image data in another CMYK color space, the K components can be set arbitrarily. The color conversion apparatus 800 according to the present invention can generate an appropriate binary image such as a halftone dot image composed of AM halftone dots with an LPI value of 250, thereby making it possible to obtain a quality printed image with ease.

Next, a second embodiment of each of the color conversion method according to the present invention, the color conversion program storage medium according to the present invention and the color conversion apparatus according to the present invention will be described.

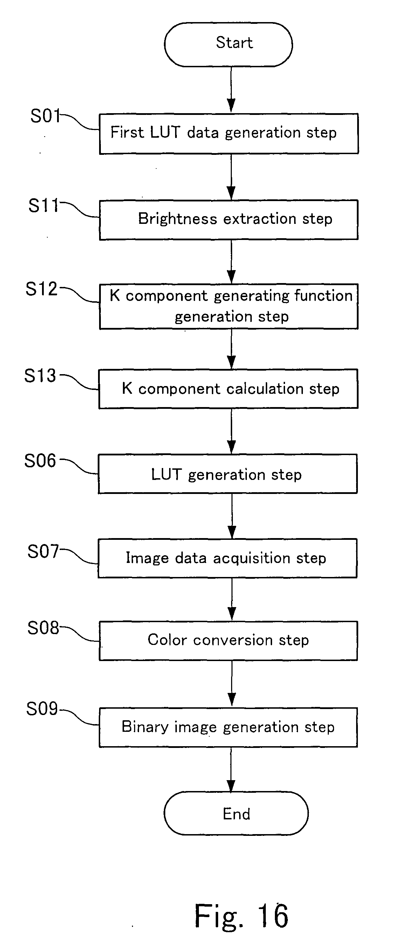

FIG. 16 is a flowchart showing a second embodiment of the color conversion method according to the present invention.

This color conversion method is composed of a first LUT data generation step (step S01), a brightness extraction step (step S11), a K component generating function generation step (S12), a K component calculation step (step S13), a LUT generation step (step S06), an image data acquisition step (step S07), a color conversion step (step S08) and a binary image generation step (step S09). Of these steps, the steps equivalent to those shown in the flowchart in FIG. 4 are given the same reference numerals as in FIG. 4 and their descriptions are omitted below. In this embodiment, the brightness extraction step (step S11), the K component generating function generation step (S12) and the K component calculation step (step S13) combined constitute an example of a K component determination step of the color conversion method according to the present invention.

In the first LUT data generation step (step S01) of this embodiment, the same as in the first embodiment of the color conversion method, plural first LUT data which represent plural reference colors respectively in the first CMYK color space corresponding to the first image data that is the object of conversion are sequentially generated. Subsequently, in the brightness extraction step (step S11) through the K component calculation step (step S13) described below, the values of the K components required when representing the reference colors corresponding to the first LUT data in a desired second CMYK color space are determined.

In the brightness extraction step (step S11), plural brightnesses representing the above-mentioned plural first LUT data respectively are extracted as the gray components of the respective colors.

In the K component generating function generation step (step S12), a K component generating function is generated by having prescribed parameter values manually inputted and transforming a fundamental function based on the prescribed parameter values. The K component generating function associates the brightnesses sequentially extracted in the brightness extraction step (step S11) with the K components in a desired second CMYK color space different from the above-mentioned first CMYK color space. The details of the K component generating function will be described later.

In the K component calculation step (step S13), using the brightnesses sequentially extracted in the brightness extraction step (step S11) and the K component generating function generated in the K component generating function generation step (step S12), the values of the K components corresponding to the extracted brightnesses are sequentially calculated.

In the LUT generation step (step S06), using the K component values sequentially calculated in the K component calculation step (step S13), the second LUT data representing the reference colors in the second CMYK color space are sequentially obtained and a LUT associating the plural second LUT data thus obtained and the plural first LUT data on a one-to-one basis is generated. Subsequently, in the color conversion step (step S08), the first image data obtained in the image data acquisition step (step S07) is converted into the second image data that represents the color represented by the first image data in the second CMYK color space according to the LUT. The binary image is then generated based on the second image data in the binary image generation step (step S09).

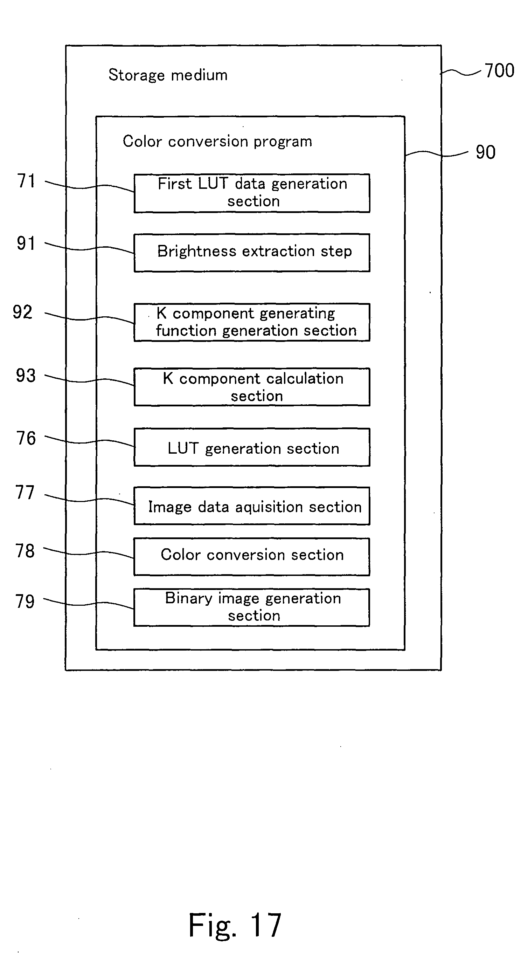

FIG. 17 illustrates a second embodiment of the color conversion program storage medium according to the present invention. In this embodiment, a color conversion program 90 is stored in a storage medium 700.

The color conversion program 90 is executed in the workstation 200 shown in FIGS. 1 and 2 to make the workstation 200 operate as a color conversion apparatus according to the second embodiment of the present invention. The color conversion program 90 includes a first LUT data generation section 71, a brightness extraction section 91, a K component generating function generation section 92, a K component calculation section 93, a LUT generation section 76, an image data acquisition section 77, a color conversion section 78 and a binary image generation section 79. Of these elements, the elements equivalent to the constituent elements of the color conversion program 70 shown in FIG. 5 are given the same reference numerals as in FIG. 5 and their descriptions are omitted below.

The details of each element of the color conversion program 90 will be described later.

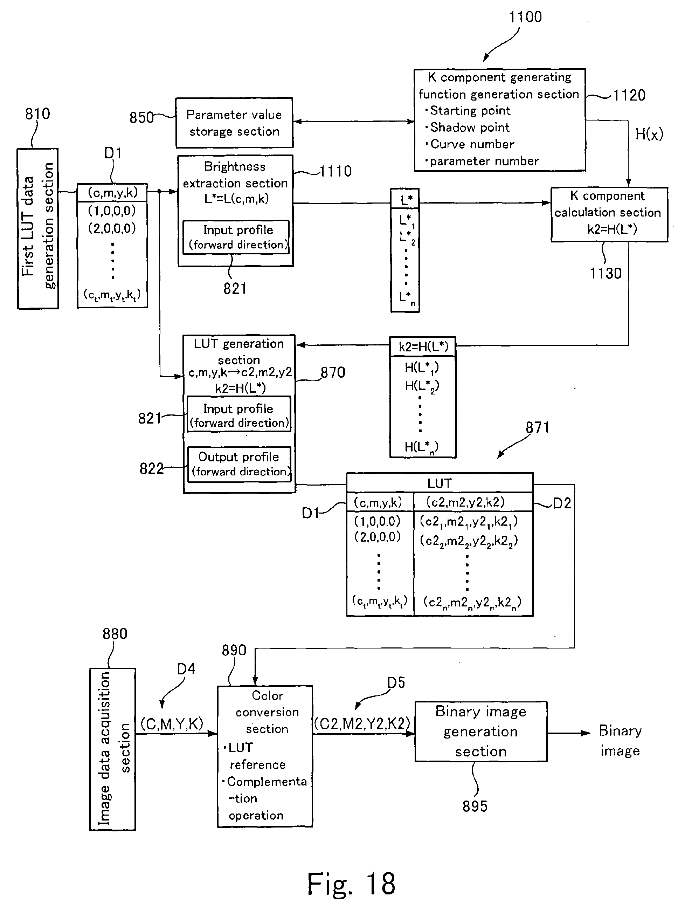

FIG. 18 is a functional block diagram of the second embodiment of the color conversion apparatus according to the present invention.

The color conversion apparatus 1100 is composed when the color conversion program 90 shown in FIG. 17 is installed and executed in the workstation 200 shown in FIGS. 1 and 2. As in the first embodiment of the color conversion apparatus according to the present invention, the color conversion apparatus 1100 converts the first image data representing color in the first CMYK color space into the second image data corresponding to the second CMYK color space different from the first CMYK color space.

This color conversion apparatus 1100 is composed of a first LUT data generation section 810, a brightness extraction section 1110, a K component generating function generation section 1120, a parameter value storage section 850, a K component calculation section 1130, a LUT generation section 870, an image data acquisition section 880, a color conversion section 890, and a binary image generation section 895. Of these elements, the elements equivalent to the constituent elements of the color conversion apparatus 800 shown in FIG. 6 are given the same reference numerals as in FIG. 6 and their descriptions are omitted below. The correspondence between the constituent elements of the color conversion program 90 shown in FIG. 17 and those of the color conversion apparatus 1100 shown in FIG. 18 is similar to the correspondence between the constituent elements of the color conversion program 70 and those of the color conversion apparatus 800 described with reference to FIGS. 5 and 6, respectively.

In the color conversion apparatus 1100 shown in FIG. 18, the brightness extraction section 1110, the K component generating function generation section 1120 and the K component calculation section 1130 combined constitute an example of a K component calculation section of the color conversion apparatus according to the present invention and the K component generating function generation section 1120 constitutes an example of a function calculation section of the color conversion apparatus according to the present invention.

In the following, by way of describing each element of the color conversion apparatus 1100 shown in FIG. 18, each step shown in the flowchart in FIG. 16 and each element of the color conversion program 90 shown in FIG. 17 will be described.

In the first LUT data generation section 810, as in the case of the color conversion apparatus according to the first embodiment, plural first LUT data D1: $(1, 0, 0, 0)$, $(2, 0, 0, 0)$, $\cdots$, $(c_t, m_t, y_t, k_t)$ representing plural reference colors in the first CMYK color space corresponding to the first image data that is the object of conversion are sequentially generated. Subsequently, in the brightness extraction section 1110 through the K component calculation section 1130 described below, K components k2: $H(L^*_1)$, $H(L^*_2)$, $\cdots$, $H(L^*_n)$ required when representing the reference colors corresponding to the first LUT data D1 respectively in a desired second CMYK color space are determined.

In the brightness extraction section 1110, the brightnesses $L^*$: $L^*_1$, $L^*_2$, $\cdots$, $L^*_n$ of the plural reference colors represented by the plural first LUT data D1: $(1, 0, 0, 0)$, $(2, 0, 0, 0)$, $\cdots$, $(c_t, m_t, y_t, k_t)$ are extracted as the gray components of the respective reference colors. The brightness $L^*$ is calculated from the corresponding first LUT data D1 using the input profile 821.

The K component generating function section 1120 obtains the parameter values, being described later, by having them inputted by the operator and generates a K component generating function $H(x)$ using the parameter values. The K component generating function $H(x)$ associates the brightness $L^*$ with K components in a desired second CMYK color space different from the first CMYK color space.

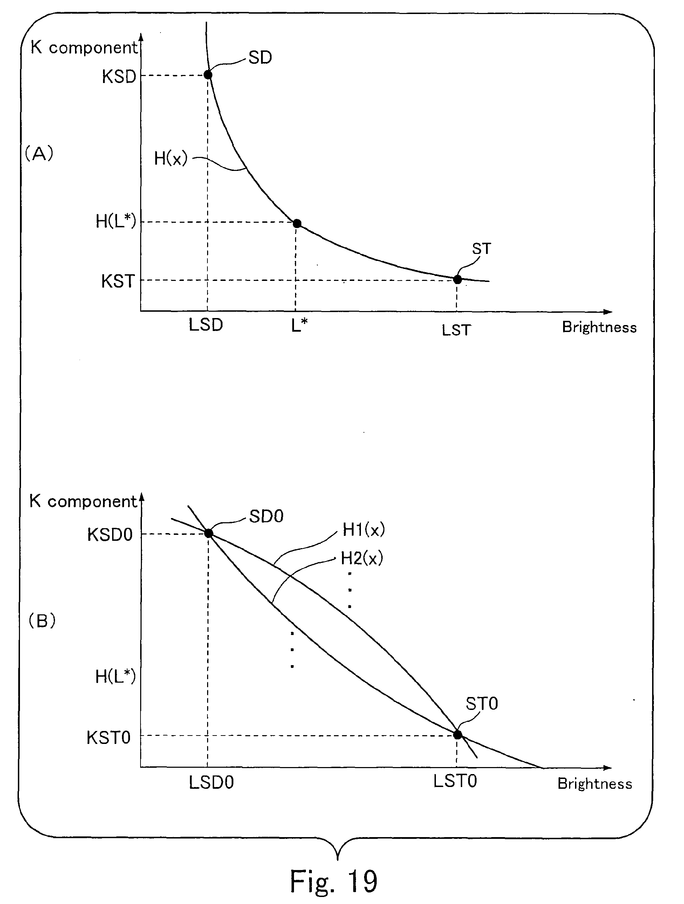

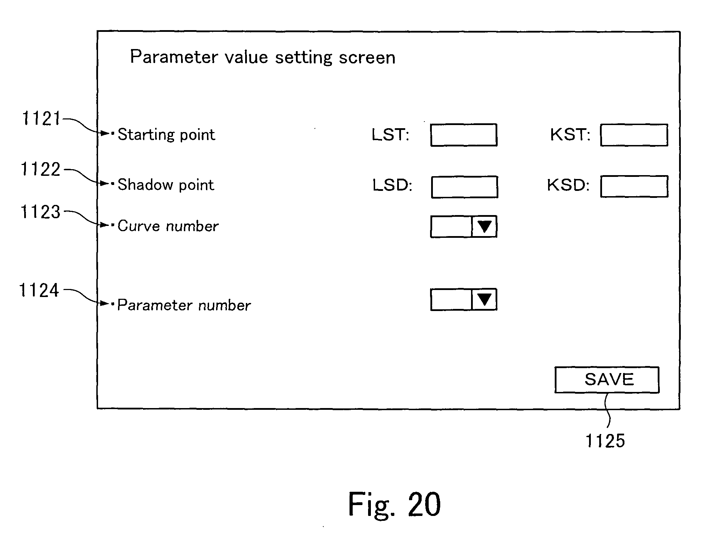

In the following, the parameter values obtained in the K component generating function generation section 1120 and the parameter values to be set manually by the operator will be described with reference to FIGS. 19 and 20.

FIG. 19 shows the parameter values obtained in the K component generating function generation section shown in FIG. 18.

Each of Part (A) and Part (B) of FIG. 19 is a graph showing correspondence between the brightness and the K component in the second CMYK color space. In each of the graphs, the horizontal axis represents the brightness and the vertical axis represents the K component. The curves shown in the graphs each represent the correspondence between the brightness and the K component.

The K component generating function $H(x)$ generated in the K component generating function generation section 1120 shown in FIG. 18 is, like the K component generating function F(x) generated in the K component generating function generation section 840 according to the first embodiment described with reference to FIGS. 6 and 7, expressed by the foregoing equation (1). Therefore, the description common to both the two K component generating functions is omitted below. Note, however, that, whereas the K component generating function of the first embodiment shown in FIG. 7 is represented by an upward curve going from left to right, the K component generating function of the present embodiment shown in FIG. 19 is represented by a downward curve going from left to right. This is because, in the graph shown in FIG. 7, the horizontal axis represents the gray component of an image. Therefore, as the gray component of an image increases going from left to right along the horizontal axis, the image grows darker. In the graph shown in FIG. 19, on the other hand, the horizontal axis represents the brightness of an image. Therefore, as the brightness increases going from left to right along the horizontal axis, the image grows brighter. What the graphs shown in FIGS. 7 and 19 represent are essentially the same.

The curve in the graph shown in Part (A) of FIG. 19 represents the K component generating function H(x) generated in the K component generating function generation section 1120. The curve passes a starting point ST corresponding to a bright image with high brightness and a shadow point SD corresponding to a dark image with low brightness. Part (B) of FIG. 19 shows plural differently shaped curves each passing two fixed points STO and SDO. The plural curves represent plural functions H1(x), H2(x), ⋯. In the present embodiment, as in the first embodiment, one of plural prescribed functions H1(x), H2(x), ⋯ is selected by selecting the corresponding curve number (for example, one of H1, H2, ⋯).

In the first embodiment, a K component generating function F(x) is determined when the parameter values for the coordinates (GST, KST) of the starting point ST and for the coordinates (GSD, KSD) of the shadow point SD shown in FIG. 7 and also a curve number are set by the operator. Similarly, in the present embodiment, a K component generating function H(x) which indicates the correspondence between the brightness and the K component is determined when the parameter values for the coordinates (LST, KST) of the starting point ST and for the coordinates (LSD, KSD) of the shadow point SD shown in FIG. 19 and also a curve number are set by the operator.

FIG. 20 is a diagram showing a parameter value setting screen used to set the parameter values shown in FIG. 19.

The parameter value setting screen shown in FIG. 20 has a starting point setting section 1121 used to set the coordinates (LST, KST) of the starting point ST shown in FIG. 19, a shadow point setting section 1122 used to set the coordinates (LSD, KSD) of the shadow point SD shown in FIG. 19, a curve number setting section 1123 used to set a curve number and a storage instruction section 1125 used to instruct storage of a combination of parameter values and a curve number set from the above-mentioned setting sections. When such a combination of parameter values and a curve number is stored, a parameter number is assigned thereto. In the present embodiment as in the first embodiment, it is possible to set a desired one of the combinations of parameter values and a curve number already stored in the parameter value storage section 850 shown in FIG. 18 instead of newly setting required parameter values and a required curve number from the respective setting sections. Such an existing combination of parameters and a curve number can be selected by selecting the corresponding parameter number. The parameter value setting screen used in the present embodiment has a parameter number setting section 1124 used to set a desired parameter number.

The description of the parameter values required to determine the K component generating function H(x) and setting of the parameter values by the operator are terminated here. Next, the description of other elements of the color conversion apparatus 1100 shown in FIG. 18 will follow.

In the K component calculation section 1130, brightnesses L*: $L^*_1$, $L^*_2$, ⋯, $L^*_n$ sequentially extracted in the brightness extraction section 1110 are assigned to the K component generating function H(x) generated in the K component generating function generation section 1120 and the K component values k2: $H(L^*_1)$, $H(L^*_2)$, ⋯, $H(L^*_n)$ are calculated.

In the LUT generation section 870, the second LUT data D2 representing the reference colors in the second CMYK color space are sequentially obtained using the K component values k2 calculated as described above and the LUT 871 to associate the second LUT data D2 and the first LUT data D1 on a one-to-one basis is generated. Then, in the color conversion section 890, the first image data D4 obtained in the image data acquisition section 880 are converted based on the LUT 871 into the second image data D5 that represent the colors represented by the image data D4 in the second CMYK color space. Subsequently, in the binary image generation section 895, the binary image is generated based on the binary image data.

As described above, when the color conversion apparatus 1100 according to the present embodiment is used to convert original image data representing color in a CMYK color space into image data representing the same color as represented by the original image data in another CMYK color space, the K component can be set arbitrarily.

In the foregoing, as an example of the function calculation section according to the present invention, a method of generating a K component generating function by having required parameter values inputted by the operator on the parameter value setting screen has been described, but the method of generating a K component generating function usable in the function calculation section according to the present invention is not limited to the above-mentioned method. For example, a method in which a graph such as those shown in FIGS. 7 and 19 is displayed on the display screen 221 shown in FIG. 2; the operator displays a desired fundamental function in the graph by operating, for example, the mouse 240 shown in FIG. 2; then the operator transforms the fundamental function displayed in the graph as desired by moving the starting point ST or the shadow point SD using the mouse 240 or the like, thereby obtaining a desired K component generating function may also be used in the function calculation section according to the present invention.

In the foregoing, as an embodiment of the present invention, a mode in which a LUT which associates the first CMYK color space with the second CMYK color space different from the first CMYK color space is generated and the first image data representing color in the first CMYK color space is converted into the second image data representing color in the second CMYK color space by making reference to the LUT has been described. The present invention, however, is not limited to the above-mentioned mode. For example, a mode in which the gray component or brightness of the color represented by the first image data is extracted directly from the first image data and the second image data representing the color represented by the first image data in the second CMYK color space is generated based on the value of the extracted gray component or brightness may be used.

## Claims

1. A color conversion apparatus which converts first image data representing color in a first CMYK color space into second image data representing color in a second CMYK color space, **characterized in that** the color conversion apparatus comprises:

   a K component determination section which extracts a gray component of the color represented in the first CMYK color space and determines a K component in the second CMYK color space based on the gray component and a function determined by operation; and
   a color conversion section which converts the first image data into the second image data using the K component determined in the K component determination section while maintaining a color match between the color represented by the first image data and the color represented by the second image data.

2. The color conversion apparatus according to claim 1, **characterized in that** the K component determination section represents the color represented in the first CMYK color space in a prescribed CMY color space and extracts a smallest one of CMY components as a gray component.

3. The color conversion apparatus according to claim 1, **characterized in that** the K component determination section extracts brightness of the color represented in the first CMYK color space as a gray component.

4. The color conversion apparatus according to claim 1, **characterized by** comprising a function calculation section which calculates the function by having prescribed parameter values manually inputted and transforming a prescribed fundamental function based on the parameter values.

5. The color conversion apparatus according to claim 1, **characterized by** comprising a binary image generation section which generates based on the second image data a binary image of each of four colors C, M, Y and K equivalent to each of color-separated images obtained by color-separating an image into the four colors C, M, Y and K.

6. The color conversion apparatus according to claim 5, **characterized in that** the binary image data generation section generates a halftone dot image as a binary image for each of the four colors C, M, Y and K, the halftone dot image being comprised of halftone dots arrayed in 250 or more lines per inch and the size of each of the halftone dots being dependent on a CMYK component value.

7. The color conversion apparatus according to claim 5, **characterized in that** the binary image data generation section generates a binary image for each of the four colors C, M, Y and K, the binary image being comprised of an aggregation of image points the number of which is dependent on the CMYK component value.

8. The color conversion apparatus according to claim 5, **characterized in that** the binary image data generation section generates a binary image for each of the four colors C, M, Y and K, the binary image being comprised of an aggregation of dots the number of which varies with changes in the CMYK component value when the CMYK component value does not exceed a prescribed lower limit value and the area of each of which varies with changes in the CMYK component value when the CMYK component value exceeds the prescribed lower limit value.

9. A color conversion program storage medium storing a color conversion program which operates on a computer and converts first image data representing color in a first CMYK color space into second image data representing color in a second CMYK color space, **characterized in that** the color conversion program storage medium stores a color conversion program while operating on the computer, comprising:

a K component determination section which extracts a gray component of the color represented in the first CMYK color space and determines a K component in the second CMYK color space based on the gray component and a function determined by operation; and
a color conversion section which converts the first image data into the second image data using the K component determined in the K component determination section while maintaining a color match between the color represented by the first image data and the color represented by the second image data.

10. A color conversion method which converts first image data representing color in a first CMYK color space into second image data representing color in a second CMYK color space, **characterized in that** the color conversion method comprises:

a K component determination step for extracting a gray component of the color represented in the first CMYK color space and determining a K component in the second CMYK color space based on the gray component and a function determined by operation; and
a color conversion step for converting the first image data into the second image data using the K component determined in the K component determination section while maintaining a color match between the color represented by the first image data and the color represented by the second image data.

EP 1 560 418 A2

11      200      30      40      41

| | | |
|---|---|---|
| Workstation | CTP | Print press |

Fig. 1

Fig. 2

213
CPU

250

230
Keyboard

214
Main
Memory

240
Mouse

216

500

215
Hard disk
device

FD drive

220
Image display
device

217
CD-ROM
drive

510

218
Input
interface

219
Output
interface

Bus

Fig. 3

```
                    ┌─────────────────┐
                    │      Start      │
                    └─────────────────┘
                             │
                             ▼
S01 ─────────┐   ┌──────────────────────────────┐
             │   │  First LUT data generation step │
                 └──────────────────────────────┘
                             │
                             ▼
S02 ─────────┐   ┌──────────────────────────────┐
             │   │      Data conversion step      │
                 └──────────────────────────────┘
                             │
                             ▼
S03 ─────────┐   ┌──────────────────────────────┐
             │   │  Gray component extraction step │
                 └──────────────────────────────┘
                             │
                             ▼
S04 ─────────┐   ┌──────────────────────────────┐
             │   │ K component generating function │
             │   │       generation step          │
                 └──────────────────────────────┘
                             │
                             ▼
S05 ─────────┐   ┌──────────────────────────────┐
             │   │  K component calculation step  │
                 └──────────────────────────────┘
                             │
                             ▼
S06 ─────────┐   ┌──────────────────────────────┐
             │   │       LUT generation step       │
                 └──────────────────────────────┘
                             │
                             ▼
S07 ─────────┐   ┌──────────────────────────────┐
             │   │   Image data acquisition step   │
                 └──────────────────────────────┘
                             │
                             ▼
S08 ─────────┐   ┌──────────────────────────────┐
             │   │      Color conversion step      │
                 └──────────────────────────────┘
                             │
                             ▼
S09 ─────────┐   ┌──────────────────────────────┐
             │   │  Binary image generation step   │
                 └──────────────────────────────┘
                             │
                             ▼
                    ┌─────────────────┐
                    │       End       │
                    └─────────────────┘
```

Fig. 4

Storage medium — 600

Color conversion program — 70

71 — First LUT data generation section

72 — Data conversion section

73 — Gray component extraction section

74 — K component generating function generation section

75 — K component calculation section

76 — LUT generation section

77 — Image data acquisition section

78 — Color conversion section

79 — Binary image generation section

Fig. 5

EP 1 560 418 A2

Fig. 6

Fig. 7

Parameter value setting screen

841 — · Starting point      GST: [ ]      KST: [ ]

842 — · Shadow point      GSD: [ ]      KSD: [ ]

843 — · Curve number      [ ▼ ]

844 — · Parameter number      [ ▼ ]

[ SAVE ]

845

Fig. 8

EP 1 560 418 A2

881

250 columns/inch

250 rows/inch

## Fig. 9

L1

L3

Effect

Easy

Effect of image
quality improvement

250

400

L2

Ease of printing

175

Ease

Difficult

100 200 300 400 500 600 700

Number of lines per inch (LP1)

## Fig. 10

882_1

Fig. 11

882_2

Fig. 12

883_1

Fig. 13

883_2

Fig. 14

Fig. 15

```
                    ┌──────────────┐
                    │    Start     │
                    └──────┬───────┘
                           │
                           ▼
S01 ──┐         ┌─────────────────────────────┐
      └─────────│ First LUT data generation step │
                └──────────────┬──────────────┘
                               │
                               ▼
S11 ──┐         ┌─────────────────────────────┐
      └─────────│  Brightness extraction step │
                └──────────────┬──────────────┘
                               │
                               ▼
S12 ──┐         ┌─────────────────────────────┐
      └─────────│ K component generating function │
                │       generation step       │
                └──────────────┬──────────────┘
                               │
                               ▼
S13 ──┐         ┌─────────────────────────────┐
      └─────────│ K component calculation step │
                └──────────────┬──────────────┘
                               │
                               ▼
S06 ──┐         ┌─────────────────────────────┐
      └─────────│     LUT generation step     │
                └──────────────┬──────────────┘
                               │
                               ▼
S07 ──┐         ┌─────────────────────────────┐
      └─────────│  Image data acquisition step │
                └──────────────┬──────────────┘
                               │
                               ▼
S08 ──┐         ┌─────────────────────────────┐
      └─────────│    Color conversion step    │
                └──────────────┬──────────────┘
                               │
                               ▼
S09 ──┐         ┌─────────────────────────────┐
      └─────────│ Binary image generation step │
                └──────────────┬──────────────┘
                               │
                               ▼
                    ┌──────────────┐
                    │     End      │
                    └──────────────┘
```

Fig. 16

Storage medium ⌐～700

Color conversion program ⌐～90

71 — First LUT data generation section

91 — Brightness extraction step

92 — K component generating function generation section

93 — K component calculation section

76 — LUT generation section

77 — Image data aquisition section

78 — Color conversion section

79 — Binary image generation section

# Fig. 17

1100

810

850 — Parameter value storage section

K component generating function generation section — 1120
· Starting point
· Shadow point
· Curve number
· parameter number

H(x)

First LUT data generation section

D1

(c,m,y,k)
(1,0,0,0)
(2,0,0,0)
·
·
·
(c_t,m_t,y_t,k_t)

Brightness extraction section
L*=L(c,m,k) — 1110

Input profile (forward direction) — 821

L*
L*_1
L*_2
·
·
·
·
L*_n

K component calculation section
k2=H(L*)

1130

LUT generation section
c,m,y,k→c2,m2,y2
k2=H(L*) — 870

Input profile (forward direction) — 821

Output profile (forward direction) — 822

k2=H(L*)
H(L*_1)
H(L*_2)
·
·
·
H(L*_n)

871

LUT

| (c,m,y,k) | (c2,m2,y2,k2) | D2 |
|---|---|---|
| (1,0,0,0) | (c2_1,m2_1,y2_1,k2_1) | |
| (2,0,0,0) | (c2_2,m2_2,y2_2,k2_2) | |
| · · · | · · · | |
| (c_t,m_t,y_t,k_t) | (c2_n,m2_n,y2_n,k2_n) | |

D1

880

Image data acquisition section

D4

(C,M,Y,K)

890

Color conversion section
· LUT reference
· Complementa -tion operation

D5

(C2,M2,Y2,K2)

Binary image generation section

Binary image

895

Fig. 18

Fig. 19

EP 1 560 418 A2

Parameter value setting screen

1121 —•Starting point    LST: [      ]    KST: [      ]

1122 —•Shadow point    LSD: [      ]    KSD: [      ]

1123 —•Curve number    [    ▼]

1124 —•Parameter number    [    ▼]

SAVE

1125

Fig. 20